# EUROPEAN PATENT SPECIFICATION

(11) **EP 3 120 403 B1**
(45) Date of publication and mention of the grant of the patent: **10.10.2018**
(21) Application number: 15710583.4
(22) Date of filing: 16.03.2015
(51) Int. Cl.: H01M 8/04276, H01M 8/08, H01M 8/083

(54) **FUEL CELL SYSTEM**
BRENNSTOFFZELLENSYSTEM
SYSTÈME DE PILES À COMBUSTIBLE

(30) Priority: 18.03.2014 GB 201404830
(43) Date of publication of application: 25.01.2017
(73) Proprietor: AFC Energy PLC, Finsgate, London EC1V 9EE (GB)
(72) Inventor: TRACY, Richard Michael, Godalming Surrey GU8 5JX (GB); LEWIS, Gene Stacey, Guildford Surrey GU1 3PZ (GB); BACKSTROM, Andreas Karl, Guildford Surrey GU1 1TR (GB)
(74) Representative: Icely, Dominic Michael
(86) International application number: PCT/GB2015/050761
(87) International publication number: WO 2015/140524

(56) References cited:
- WO-A1-2013/175169
- JP-A- H01 235 162
- US-A- 3 579 721
- US-A- 4 824 534

## Description

The present invention relates to liquid electrolyte fuel cells, and to a fuel cell system that incorporates such liquid electrolyte fuel cells.

### Background to the invention

Fuel cells have been identified as a relatively clean and efficient source of electrical power. Alkaline fuel cells are of particular interest because they operate at relatively low temperatures, are efficient and mechanically and electrochemically durable. Acid fuel cells and fuel cells employing other liquid electrolytes are also of interest. Such fuel cells typically comprise an electrolyte chamber separated from a fuel gas chamber (containing a fuel gas, typically hydrogen) and a further gas chamber (containing an oxidant gas, usually air). The electrolyte chamber is separated from the gas chambers using electrodes. To provide adequate power and adequate voltage, fuel cells are commonly arranged as a stack, that is to say multiple fuel cells are operated together; by connecting the fuel cells electrically in series, a larger output voltage is obtained. The liquid electrolyte may be circulated through the cells in the stack, and through a recirculation network. However there can be shunt currents flowing through the electrolyte, which lower the efficiency of the fuel cell stack. A prior art fuel cell system is taught e.g. in JPH01235162 A, US4824534 or WO2013175169 A1.

### Discussion of the invention

The fuel cell system of the present invention is defined in independent claim 1 and addresses or mitigates one or more problems of the prior art.

According to the present invention there is provided a fuel cell system comprising at least one fuel cell stack, and a recirculation network for circulating a liquid electrolyte through each fuel cell stack, the recirculation network including a fluid supply duct and a decoupling module in the recirculation network; the decoupling module comprising an upper chamber and a lower chamber separated by a perforated plate, and the fluid supply duct being arranged to supply the liquid electrolyte to the upper chamber through an inlet port; the perforated plate having a surface area at least twice the cross-sectional area of the inlet port, and defining multiple perforations, each perforation being a countersunk hole for through flow of the liquid electrolyte into the lower chamber; the lower chamber including a collection tray to collect the liquid electrolyte that falls through the holes, the collection tray communicating with a fluid flow duct of the recirculation network, the collection tray being sufficiently far below the plate that the liquid electrolyte that has fallen through a countersunk hole breaks up into droplets before it reaches the collection tray.

The perforated plate may have a surface area at least 10 times or at least 20 times the cross-sectional area of the inlet port, and it may be at least 30 times the cross-sectional area of the inlet port. Preferably the flow direction through the inlet port is not aligned with any of the holes, and for example the flow direction through the inlet port may be aligned in a direction inclined from the orientation of the holes, for example at between 30° and 90°, preferably approximately orthogonal to the orientation of the holes, this referring to the direction of flow at the centre of the inlet port; the phrase "approximately orthogonal" means within 10° of being orthogonal. The term "the orientation of' a hole refers to the orientation of a line that passes through the hole along its centreline, which is typically the longitudinal axis of the hole.

The term "countersunk hole" means a hole that has a portion of substantially constant cross-section, and an end portion that widens out, for example forming a frusto-conical recess; a hole may be said to be "countersunk" by the formation of such a widening out end portion; and the widening end portion may be referred to as the "countersink". Preferably the holes through the perforated plate are countersunk at the lower face of the plate. For example the holes may be countersunk to form a frusto-conical recess whose opposite surfaces are inclined at an angle of no more than 130° to each other, for example at an angle between 90° and 45°, such as 60°. The diameter of the lowest part of each hole may be no more than 5 times the diameter of the non-countersunk part of the hole, for example in the range between 1.5 and 3 times that diameter. This has been found to enhance the breakup of the liquid electrolyte into droplets.

In operation, the electrolyte is fed into the fluid supply duct, and therefore collects as a layer on the upper surface of the perforated plate, and falls through the holes, breaking up into droplets before being collected in the collection tray, from which it flows out into the fluid flow duct of the recirculation network. The collection tray may form the base of the lower chamber, or alternatively the collection tray may be mounted above the base of the lower chamber.

The effect of the decoupling module is to break up the stream of electrolyte between the fluid supply duct and the fluid flow duct, and thereby to suppress electric current carried by ions in the electrolyte within that part of the recirculation network.

Such a decoupling is provided in a duct that carries electrolyte to a fuel cell stack and a further such a decoupling module may be provided also in a duct which carries spent electrolyte from a fuel cell stack.

When the decoupling module is provided in a duct that carries electrolyte to a fuel cell, the collection tray is provided with an overflow channel at a higher position than the fluid flow duct. In operation the flow of electrolyte into the fluid supply duct should be at least equal to, and preferably greater than, that flowing out of the fluid flow duct, so the excess electrolyte flows out of the overflow channel, the depth of electrolyte therefore reaching a steady state corresponding to the position of the overflow channel. The electrolyte is therefore supplied to the fuel cell stack at a substantially constant pressure.

The excess liquid electrolyte may be fed back to an electrolyte storage tank. In this situation there is the possibility of ionic current flowing in the electrolyte that flows through the overflow channel. The system may therefore also include a device to break up the electrolyte flow from the overflow channel, and so the decoupling module may include a secondary decoupling unit to break up the excess liquid electrolyte into droplets. In this context the combination of the perforated plate and the collection tray may be referred to as a primary decoupling unit.

The collection tray, as indicated above, defines or communicates with an overflow channel for the excess liquid electrolyte. The secondary decoupling unit may include a tubular duct into which liquid electrolyte is arranged to be fed from the overflow channel, the tubular duct defining a portion with small apertures through its walls through which the liquid electrolyte may emerge as liquid jets. The secondary decoupling unit may also include a collection vessel to collect the liquid electrolyte from the small apertures, and the collection vessel may be arranged sufficiently far below the apertures to ensure that the liquid jets break up into droplets before they reach the collection vessel. The collection vessel may be defined by a base portion of the decoupling module, below the collection tray if the secondary decoupling unit is in the same housing as the perforated plate and the collection tray that form the primary decoupling unit.

The portion of the tubular duct in which there are the small apertures may extend in a generally horizontal direction, or may be inclined to the horizontal at a small angle, for example less than 30°, for example 20°. The small apertures through the wall of this portion may be oriented above the horizontal, so the liquid jets emerge from the upper side of the portion of the tubular duct. If the rate of flow of excess liquid electrolyte significantly varies, there may be an advantage in having the portion of the tubular duct inclined to the horizontal, such that as the rate of flow increases the liquid electrolyte occupies a greater part of the length of the tubular duct, and emerges through a larger number of the small apertures.

Hence a fuel cell system may comprise a plurality of fuel cell stacks, and a recirculation network for supplying electrolyte to each fuel cell stack, where there are at least as many decoupling modules as fuel cell stacks, at least one decoupling module for each fuel cell stack. There may be decoupling modules in both the duct that carries electrolyte to a fuel cell stack, and the duct which carries spent electrolyte from that fuel cell stack. Each decoupling module, if it is in a duct carrying electrolyte to a fuel cell stack, may also include a secondary decoupling unit as described above.

One such decoupling module has been found suitable for breaking up an electrolyte flow of as much as 60 litres/min or more, for example up to 40 litres/min, for example 10, 20 or 30 litres/min. The size of the decoupling module may be selected in accordance with the expected flow rate of electrolyte. Typically the secondary decoupling unit, where this is provided, would carry a flow rate no more than half that of the primary decoupling unit, more typically no more than a fifth, for example a tenth or a twentieth or less.

It will be appreciated that the decoupling module can suppress ionic leakage currents in the electrolyte recirculation network, those currents being generated by one or more of the fuel cell stacks. It does not have any effect on any ionic leakage currents that may occur between cells of the fuel cell stack. Those ionic leakage currents may be suppressed in other ways, for example by feeding electrolyte into a single cell through a long and narrow flow channel; or by arranging electrolyte to flow into a single cell in discrete drops; or by other means.

The invention will now be further and more particularly described, by way of example only, and with reference to the accompanying drawings in which:
Figure 1 shows a schematic flow diagram of a liquid electrolyte fuel cell system, including a recirculation network with decoupling modules;
Figure 2 shows an end view of a decoupler that comprises a plurality of the decoupling modules;
Figure 3 shows a sectional view (to a larger scale) on the line 3-3 of figure 2;
Figure 4 shows a sectional view on the line 4-4 of figure 2;
Figure 5 shows a sectional view on the line 5-5 of figure 3;
Figure 6 shows a partial plan view in the direction of arrow A of figure 4; and
Figure 7 shows a fragmentary cross-sectional view on the line 7-7 of figure 6.

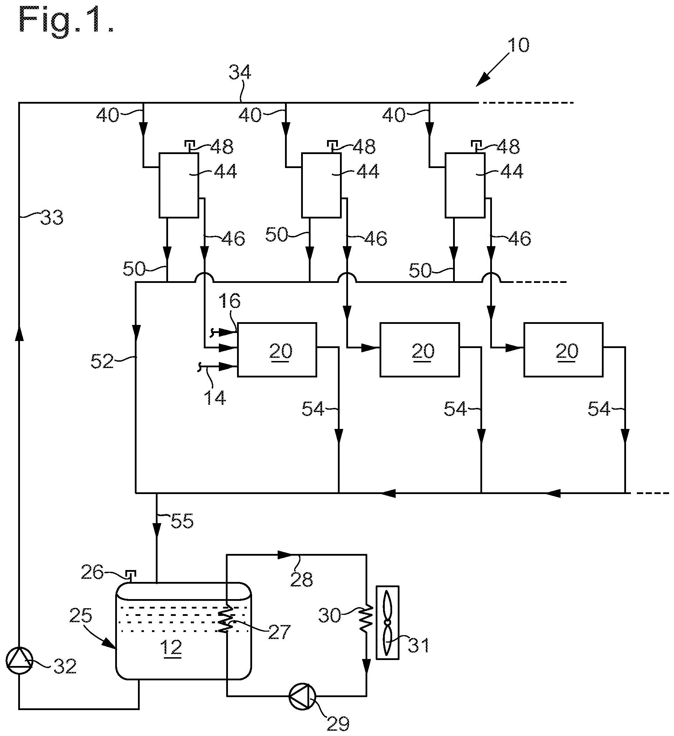

Referring now to figure 1, a fuel cell system 10 is shown which includes a number of fuel cell stacks 20 (three fuel cell stacks are shown, schematically). As indicated by broken lines, there may be a larger number of fuel cell stacks 20. For example there may be eight fuel cell stacks 20.

Each fuel cell stack 20 uses an aqueous electrolyte 12, for example an aqueous solution of potassium hydroxide, which might for example be at a concentration of 6 M (i.e. 6 moles/litre). Each fuel cell stack 20 is supplied with a fuel, such as hydrogen gas; an oxidant such as air, and electrolyte 12, and operates at an electrolyte temperature of for example about 55°, 60° or 65°C. Inlet ducts 14 and 16 for hydrogen and for air are shown schematically for one of the fuel cell stacks 20.

Each fuel cell stack 20 is represented schematically, but it consists of a stack of several fuel cells, for example there might be between five and 200 fuel cells, for example 5, 10, 20, 40, 80, 100, 120 or 140 fuel cells or more, as required to provide a desired output voltage. In each fuel cell stack 20, each fuel cell comprises a liquid electrolyte chamber between opposed electrodes, the electrodes being an anode and a cathode. In each cell, air flows through a gas chamber adjacent to the cathode, to emerge as spent air. Similarly, in each cell, hydrogen flows through a gas chamber adjacent to the anode, and emerges as an exhaust gas stream.

The electrolyte 12 is stored in an electrolyte storage tank 25 which is provided with a vent 26; in a modification the vent 26 may not be provided as the pressure may be regulated in another fashion. The storage tank 25 is also provided with a heat exchanger 27 which forms part of a coolant circuit 28 that also includes a circulation pump 29 and an air-cooled heat exchanger 30 with an air fan 31. The coolant circuit 28 enables the temperature of the electrolyte 12 to be maintained at a desired value.

A pump 32 circulates electrolyte 12 from the storage tank 25 through a pipe 33 into a header duct 34 from which a plurality of feed ducts 40 provide the electrolyte 12 to the fuel cell stacks 20, one feed duct 40 for each fuel cell stack 20. Each feed duct 40 communicates via a decoupling module 44, and then through a fluid flow duct 46 to the fuel cell stack 20. The decoupling module 44 is provided with a vent 48. Each decoupling module 44 has an outflow pipe 50 which connects to a common outflow pipe 52 from all the decoupling modules 44. Spent electrolyte from each fuel cell stack 20 returns to the storage tank 25 through a return duct 54. The return ducts 54 from all the fuel cell stacks 20, and the common outflow pipe 52 carrying the excess electrolyte from all the decoupling modules 44, all feed into the storage tank 25 through a common return pipe 55.

Thus the electrolyte 12 is recirculated from the storage tank 25 by the pump 32 to the header duct 34 and the fluid flow ducts 46 to the fuel cell stacks 20, and then back through the return ducts 55 to the storage tank 25. Any excess electrolyte in the header duct 34 is returned to the storage tank 25 via the outflow pipes 50. The recirculation of the electrolyte 12 through the fuel cell stacks 20 removes heat produced within the fuel cell stacks 20, and this heat may be dissipated into the environment by the coolant circuit 28. The recirculation loop includes the decoupling modules 44, which suppress ionic leakage current through the flowing electrolyte; the decoupling modules 44 also ensure that the electrolyte 12 is supplied to each fuel cell stack 20 at a substantially constant pressure.

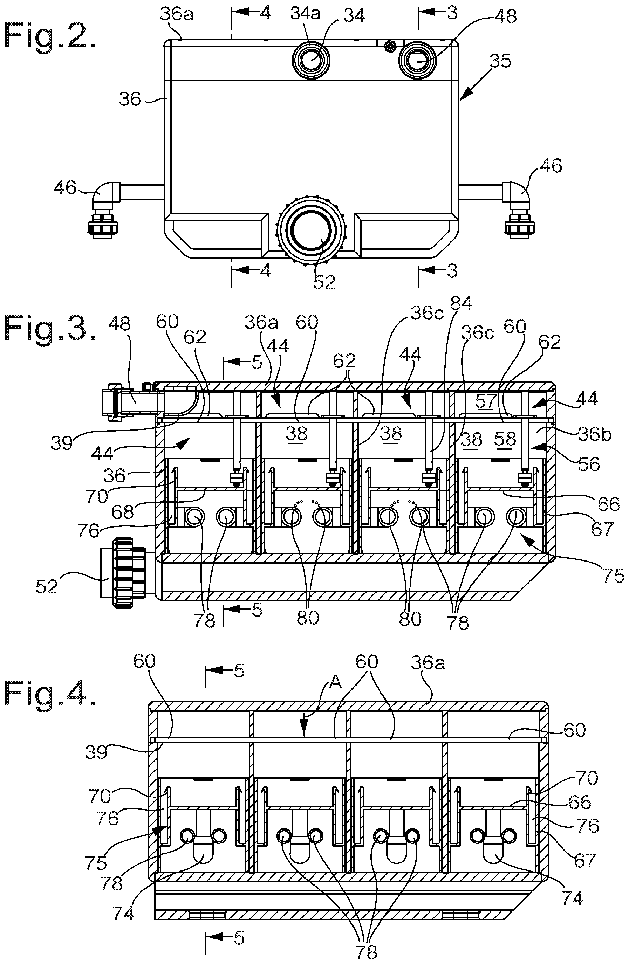

Since the fuel cell system 10 contains a number of fuel cell stacks 20, it may be convenient to combine a number of decoupling modules 44 into a single decoupler 35, and referring now to figure 2, this shows an end view of the decoupler 35, which in this example incorporates eight decoupling modules 44. As shown in figure 2, at the end of the decoupler 35 is a connector 34a for the header duct 34, and connectors for the air vent 48 and the common outflow pipe 52; and there are eight separate fluid flow ducts 46 that emerge from the sides of the decoupler 35. The decoupler 35 is in the form of a box 36 with a lid 36a.

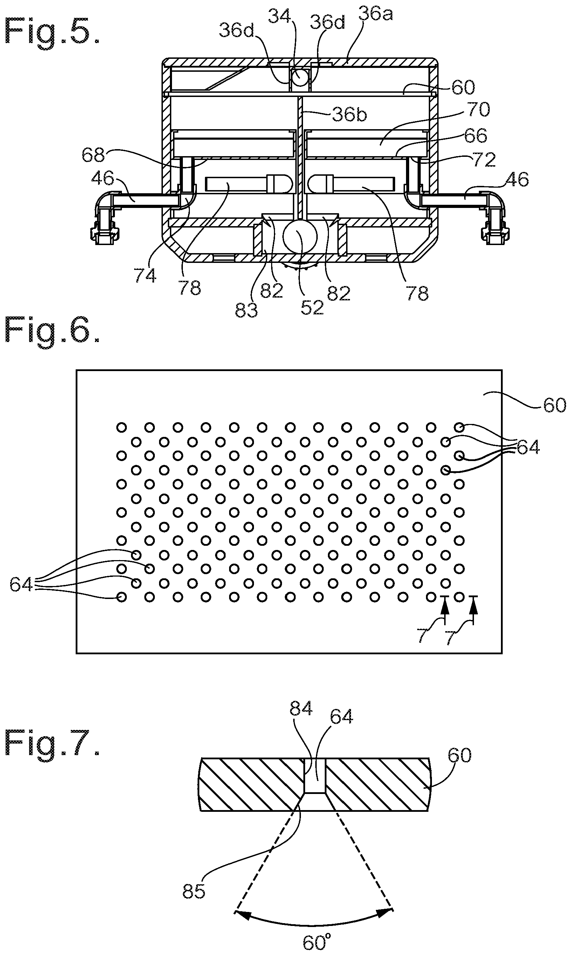

Referring now to figure 3, this shows a sectional view of the decoupler 35, showing four of the decoupling modules 44. The box 36 is subdivided by a central wall 36b and six transverse walls 36c into eight chambers 38, each corresponding to a separate decoupling module 44. Each decoupling module 44 comprises a primary decoupling unit 56 defining an upper chamber 57 and a lower chamber 58 separated by a perforated plate 60. An inlet port 62 just above the perforated plate 60 communicates with the header duct 34 (so the inlet port 62 corresponds to the feed duct 40), so the electrolyte 12 is fed into the upper chamber 57 initially in a horizontal flow direction. By way of example the inlet port 62 may be a slot of dimensions 10 mm x 160 mm, and so of area 1600 mm², whereas the perforated plate 60 may be 180 mm x 300 mm, so that its area is about 34 times greater. The perforated plate 60 defines multiple through holes 64 which are described in more detail below. In this example the perforated plates 60 for all the decoupling modules 44 are integral with each other, so they constitute a single plate 39, but the plate 39 has portions without through holes 64 around the margin of each chamber 38 (as shown in figure 6).

As shown in figure 5, the header duct 34 is defined by two side walls 36d that project below the lid 36a and rest on the top surface of the single plate 39; the inlet ports 62 are defined in the side walls 36d.

As shown in figures 3 to 5, in each lower chamber 58 is a collection tray 66 forming part of a box 67. The collection tray 66 has a flat base plate 68 that is 100 mm below the top of the box 67, and it has side walls 70 that are 80 mm high and are fixed to the ends of the box 67. An outlet port 72 (see figure 5) in the base plate 68 communicates through a 90° pipe elbow 74 with the fluid flow duct 46. The base plate 68 is 180 mm below the perforated plate 60, so that the top edges of the side walls 70 are 100 mm below the perforated plate 60. This dimension is by way of example only; the height of the top edges of the side walls 70 below the perforated plate 60 might for example be higher or lower depending on electrolyte characteristics.

Thus in use electrolyte 12 fed in through the inlet port 62 spreads out over the top of the perforated plate 60, and fills up to a depth at which the inflow rate is equal to the flow rate through all the holes 64 in the perforated plate 60. For example it may fill up to a depth of 50 or 60 mm. The electrolyte falls down into the collection tray 66, forming droplets as it falls, and filling up to the height of the side walls 70; any excess electrolyte overflows the side walls 70, while electrolyte 12 flows at substantially constant pressure (corresponding to the height of the side walls 70) out of the outlet port 72 and so into the fuel cell stack 20. The perforated plate 60 and the collection tray 66 constitute the primary decoupling unit 56.

The electrolyte that overflows the side walls 70 must then pass through a secondary decoupling unit 75 to reach the outflow duct 50. Outside each side wall 70 is an overflow chamber 76 which extends well below the base plate 68, for example 150 mm below, and the bottom of the overflow chamber 76 communicates (as shown in figure 3) with a horizontally-extending pipe 78 which is closed at its opposite end. The pipe 78 defines multiple small holes 80 along its upper side, shown schematically in figure 3, to one side of the centre plane of the pipe 78, for example between ten and twenty small holes 80, in this example there being twelve such holes 80, each of diameter 2.5 mm. The bottoms of the pipes 78 are 100 mm above the bottom of the decoupling module 44, and at the bottom of the decoupling module 44 is an outlet port 82 (shown in figure 5) communicating via a sump 83 with the common outflow pipe 52.

In this example each collection tray 66 is provided with a liquid level sensor 84, to ensure a consistent level of electrolyte in the collection tray 66, and so a consistent supply to the fuel cell stack 20. This may be connected to an alarm if the electrolyte level drops significantly.

The overflow chamber 76 and the pipe 78 with the small holes 80 together constitute the secondary decoupling unit 75. In operation the excess electrolyte flows into the overflow chamber 76, filling this up to a depth such that electrolyte emerges as jets from the small holes 80, and the jets of electrolyte break up into droplets before they reach the bottom of the chamber 38. By way of example these small holes 80 may be of diameter between 0.5 mm and 3 mm, for example 2 mm or 2.5 mm, and the number of holes 80 clearly must be selected in accordance with the expected flow rate of excess electrolyte, so that if the flow rate is constant, electrolyte will fill the overflow chamber 76 to a constant level. Because the electrolyte jets break up into droplets, there is a high electrical resistance between the electrolyte entering the overflow chamber 76 and electrolyte flowing out of the common outflow pipe 52.

Referring now to figure 6, which shows the portion of the single plate 39 corresponding to a single decoupling module 44, the perforated plate 60 in this example defines 163 through holes 64, arranged as an array over the central portion of the perforated plate 60 that is directly above the collection tray 66. The array is of thirteen rows of seven holes 64, at centre-to-centre spacings of 20 mm in each direction, between which are arranged twelve rows of six holes 64, so each hole 64 in the second array is at the centre of a square defined by four holes 64 of the first array. Hence the closest distance between holes 64 is on the diagonal lines, where the spacing is 14.1 mm. This arrangement of the holes 64 has been found to provide adequate droplet separation in operation, but the spacing may be altered for electrolytes of different characteristics. In other examples the closest distance between the holes 64 may be between 6 mm and 40 mm; the separation is such that streams of electrolyte through adjacent holes 64 do not intersect, or are unlikely to intersect.

Referring now to figure 7 there is shown a sectional view through a fragment of the perforated plate 60 showing the details of one of the holes 64. The perforated plate 60 is of thickness 6 mm. Each hole 64 has an upper part 84 which is cylindrical, and of diameter 2.5 mm and of length 3.9 mm, and a conical portion 85 of depth 2.1 mm at the underside of the perforated plate 60, widening out to a maximum diameter of 4.9 mm, so the opposite sides are inclined at 60° to each other. This conical portion 85 may be referred to as a countersink, and the hole 64 may be described as being countersunk.

In the decoupler 35 the electrolyte is supplied through eight slot-shaped inlet ports 62, into eight separate upper chambers 57, one corresponding to each decoupling module 44. As a modification, some features of the upper chambers 57 may be shared between different decoupling modules 44. For example the side walls 36d that extend down from the lid 36a to define the header duct 34 of the decoupler 35 may be modified so that they extend only part of the distance to the perforated plate 39, so defining a continuous gap between the bottom of the sidewall 36d and the perforated plate 39; and this gap may become progressively wider the further away from the connector 34a to which the electrolyte is supplied. For example each such modified side wall 36d may be of a long triangular shape, so the gap increases linearly along the length of the box 36. In addition, the dividing walls that separate the upper chambers 57 above the perforated plate 39 may be omitted. In addition the modified side walls 36d may not extend the entire length of the box 36, so leaving a narrow gap between the connector 34a and the start of the modified side wall 36d. In this case the electrolyte is fed through the connector 34a, which may be of internal diameter 50 mm, and spreads out over the entire area of the perforated plate 39 (which is of area eight times that of each plate 60).

### Experimental Tests

Some experimental measurements have been made to observe the process of a jet emerging through a hole 64 and breaking up into droplets, as must happen in operation of the primary decoupling unit 56 as the electrolyte flows through the holes 64 in the perforated plate 60. These experimental tests used a variety of differently shaped holes 64, some without a countersink, and others with the countersink either at the top or the bottom of the plate. The distance taken by the liquid jet to break up into droplets is not entirely consistent, but there are clear differences between the different hole shapes. Observations of the break-up distance were made using a camera to freeze the motion. Furthermore there are differences depending on the nature of the liquid, and tests have been carried out with water and with aqueous potassium hydroxide solution (referred to as KOH). In each case the "break-up distance" means the distance below the plate at which the jet breaks up into droplets.

### 1. Effect of Countersink

These preliminary experiments were at a consistent pressure head of 70 mm, with either water or KOH as the liquid.
2.5 mm diameter hole with 8 mm wide countersink (angle 118°), with water as the liquid:

| | |
|---|---|
| countersink above: | break-up distance 105-125 mm |
| no countersink: | break-up distance 60-90 mm |
| countersink below: | break-up distance 40-50 mm |

3 mm diameter hole with 9.5 mm wide countersink (angle 118°), with water as the liquid:

| | |
|---|---|
| countersink above: | break-up distance 78-125 mm |
| no countersink: | break-up distance 66-115 mm |
| countersink below: | break-up distance 65-90 mm |

3 mm diameter hole with 9.5 mm wide countersink (angle 118°), with KOH as liquid:

| | |
|---|---|
| countersink above: | break-up distance 120-200 mm |
| no countersink: | break-up distance 100-170 mm |
| countersink below: | break-up distance 60-100 mm |

3 mm diameter hole with 6 mm wide countersink (angle 60°), with KOH as liquid:

| | |
|---|---|
| countersink above: | break-up distance 105-180 mm |
| no countersink: | break-up distance 85-150 mm |
| countersink below: | break-up distance 48-78 mm |

These experiments make clear that the provision of the countersink on the underside of the plate is a significant factor in achieving a shorter break-up distance. It is also clear that the break-up distances with aqueous potassium hydroxide tend to be somewhat larger than those with water.

### 2. Effect of Temperature

The viscosity of aqueous potassium hydroxide solution varies with temperature, so it may be expected that the break-up distance will also vary with temperature. This has been observed, as shown in Table 1 below, with a 2.5 mm hole with the countersink below, at an angle of 118° and a depth of 3 mm (i.e. a width of about 12 mm). In each case the pressure head is 70 mm of the liquid.

**Table 1**

| Temperature/°C | break-up distance/mm |
|---|---|
| 25 | 110 |
| 30 | 98 |
| 35 | 73 |
| 40 | 75 |
| 45 | 66 |
| 50 | 65 |
| 55 | 71 |
| 60 | 80 |

Since the operating temperature of the electrolyte in the fuel cell system 10 is typically about 55° or 60°C when circulated through the decoupling module 44, it is significant that the break-up distance appears to decrease as the temperature rises to about 50°C, but gradually increases for higher temperatures.

### 3. Effect of Different Hole Shapes

Experiments have also been carried out with holes of different diameters D, and with countersinks (CSK) of different angles and depths, using aqueous potassium hydroxide electrolyte as the liquid, at a temperature of 60°C. In each case the pressure head is 70 mm of the liquid. In each case multiple observations were made (at least four in each case), and the average and range of values of break-up distance L are shown in Table 2:

**Table 2**

| D/mm | CSK angle/° | CSK depth/mm | L(average)/mm | L (range)/mm |
|---|---|---|---|---|
| 2.5 | 60 | 2 | 60 | 35 |
| 2.5 | 118 | 3 | 70 | 40 |
| 2.5 | 118 | 2.5 | 77 | 15 |
| 3 | 60 | 2.5 | 80 | 45 |
| 3 | 118 | 2.5 | 84 | 30 |

This data suggests that the optimum results, that is to say the shortest and most consistent break-up distance L, are to be obtained with a 2.5 mm hole, and preferably with the countersink angle of 60° and a depth of 2 mm (substantially as shown in figure 4). It is nevertheless clear that a range of other hole and countersink sizes might be used instead.

Thus, referring back to the decoupling module 44 described above, with the holes 64 as shown in figures 6 and 7, the expected or average value of the break-up distance is 60 mm (with a range between the shortest and longest of 35 mm). So the longest expected break-up distance is roughly 77.5 mm. The height between the bottom of the perforated plate 60 and the level of electrolyte in the collection tray 66, determined by the height of the side walls 70, is 100 mm, which allows for variability in the break-up distance. Under these circumstances it can be expected that the electrolyte jets will all have broken up into droplets before they reach the electrolyte in the collection tray 66.

For example tests have been carried out with an electrolyte flow entering the decoupling module 44 of 52 litres/min. With the perforated plate 60 at a height above the level of the electrolyte in the collection tray 66 such that the liquid jets were just beginning to break up, the electrical resistance measured between the inlet port 62 and the outlet port 72 was 75 kΩ. In contrast, with the perforated plate 60 at such a height above the level of the electrolyte in the collection tray 66 that the liquid jets were breaking up before reaching the electrolyte, the observed electrical resistance was 2 - 6 MΩ.

It will be appreciated that the number of holes 64 should be selected in accordance with the expected maximum electrolyte flow rate. In the decoupling module 44, as the flow rate of electrolyte supplied to the inlet port 62 increases, the depth of electrolyte above the perforated plate 60 also increases, for example it might be 70 mm with an electrolyte flow of 52 litre/min. If the flow rate of electrolyte becomes less, the depth of electrolyte above the perforated plate 60 will also decrease; and the break-up distance also decreases, so that the electrical resistance may slightly increase. For example at a flow rate that gives a depth of electrolyte of 20 mm, the electrical resistance was observed to increase to 4 - 10 MΩ.

It will be appreciated that the decoupling module 44 may differ from the one described above, while remaining within the scope of the invention. In one modification the height of the perforated plate 60 relative to the collection tray 66 may be adjustable, so the break-up distance can be optimised for different flow rates, for example height may be increased if the flow rate is increased. Furthermore the size and shape of the module and its components may differ. The number and size of holes through the perforated plate 60 may be different, for example in one example there are only 90 holes, and in another example there are 150 holes; and the height of the perforated plate 60 above the level of the overflow from the collection tray 66 might be different, for example in one example the height is 80 mm while in another example the height is 150 mm, and more generally the height is typically between 60 mm and 200 mm, although this depends on the maximum liquid flow rate that is to be passed through it. As regards the secondary decoupling unit 75, there might be only one overflow (equivalent to the sidewall 70) over which excess liquid flows, or there might be more than two overflows; and instead of there being a separate pipe 78 (with holes 80) for each overflow, a plurality of overflows might feed into a common pipe 78. Furthermore the pipe 78 may be provided with a device for adjusting the number of holes 80 that are open, for example a sleeve that can be slid over the outside of the pipe 78.

In another alternative, instead of the pipe 78, there may be a secondary perforated plate onto which the overflowing electrolyte liquid is fed, the under surface of the secondary perforated plate being sufficiently far above the bottom of the decoupling module that the electrolyte breaks up into droplets after falling through the secondary perforated plate. In this case the secondary decoupling unit operates in substantially the same way as the primary decoupling unit 56. However this may have the disadvantage that the overall height of the decoupling module has to be higher, because the liquid jets that emerge through the holes of the secondary perforated plate are emerging downward, whereas the liquid jets that emerge through the holes 80 are at least partly upward.

Although as described above the secondary decoupling unit 75 is within the same housing as the primary decoupling unit 56, in an alternative the secondary decoupling unit may consist of a separate unit in a separate housing.

It will also be appreciated that although the fuel cell system 10 of figure 1 provides a separate decoupling module 44 to provide electrolyte to each fuel cell stack 20, in a modification a decoupling module 44 might instead provide electrolyte to a plurality of the fuel cell stacks 20. As another alternative, it will also be appreciated that a single fuel cell stack 20 might be supplied with electrolyte from two different decoupling modules 44. It will also be appreciated that other aspects of the fuel cell system 10 may be varied, for example the electrolyte storage tank 12 may be provided with a different device for regulating its temperature, such as a waste heat recuperation device.

## Claims

1. A fuel cell system comprising at least one fuel cell stack (20), and a recirculation network for circulating a liquid electrolyte through each fuel cell stack, the recirculation network (25,32,40,46,54) including a fluid supply duct (40) and a decoupling module (44) in the recirculation network, the decoupling module (44) being in a duct that carries electrolyte to a fuel cell stack (20); the decoupling module being provided with a vent (48) and comprising an upper chamber (57) and a lower chamber (58) separated by a perforated plate (60), and the fluid supply duct (40) being arranged to supply the liquid electrolyte to the upper chamber (57) through an inlet port; the perforated plate (60) having a surface area at least twice the cross-sectional area of the inlet port, and defining multiple perforations, each perforation being a countersunk hole (64) for through flow of the liquid electrolyte into the lower chamber; the arrangement being such that in operation electrolyte spreads out over the top of the perforated plate and fills up to a depth at which the in-flow rate is equal to the flow rate of electrolyte through the holes of the perforated plate; the lower chamber (58) including a collection tray (66) to collect the liquid electrolyte that falls through the holes, the collection tray communicating with a fluid flow duct (46) of the recirculation network, the collection tray (66) being sufficiently far below the plate that the liquid electrolyte that has fallen through a countersunk hole breaks up into droplets before it reaches the collection tray; and the collection tray being provided with at least one overflow channel at a higher position than the fluid flow duct (46), to carry excess electrolyte.

2. A fuel cell system as claimed in claim 1 wherein the perforated plate has a surface area at least 20 times the cross-sectional area of the inlet port.

3. A fuel cell system as claimed in claim 1 or claim 2 wherein the fluid flow through the inlet port is not aligned with any of the holes.

4. A fuel cell system as claimed in any one of the preceding claims wherein the fluid flow through the inlet port is approximately orthogonal to the orientation of the holes.

5. A fuel cell system as claimed in any one of the preceding claims wherein the holes through the perforated plate are countersunk at the lower face of the plate.

6. A fuel cell system as claimed in claim 5 wherein the holes are countersunk to form a frusto-conical recess whose opposite surfaces are inclined at an angle of no more than 130° to each other, to such a depth that the diameter of the lowest part of each hole is no more than 5 times the diameter of the non-countersunk part of the hole.

7. A fuel cell system as claimed in any one of the preceding claims wherein the collection tray is mounted above the base of the decoupling module.

8. A fuel cell system as claimed in any one of the preceding claims wherein each overflow channel communicates with a secondary decoupling unit to break up the excess liquid electrolyte into droplets.

9. A fuel cell system as claimed in claim 8 wherein the secondary decoupling unit comprises a tubular duct into which liquid electrolyte is arranged to be fed from the overflow channel, the tubular duct defining a portion with small apertures through its walls through which the liquid electrolyte may emerge as a liquid jet.

10. A fuel cell system as claimed in claim 9 wherein the portion of the tubular duct in which there are the small apertures extends in a generally horizontal direction.

11. A fuel cell system as claimed in claim 9 or claim 10 wherein the small apertures through the wall of the tubular duct are oriented above the horizontal, so the liquid jets emerge from the upper side of the portion of the tubular duct.

12. A fuel cell system as claimed in any one of claims 8 to 11 wherein the secondary decoupling unit is adapted to carry a flow rate no more than half that which passes through the perforated plate.

13. A fuel cell system as claimed in any one of claims 8 to 12 wherein the secondary decoupling module has a common housing with the decoupling module.

## Patentansprüche

1. Brennstoffzellensystem, umfassend mindestens einen Brennstoffzellenstapel (20) und ein Rückführungsnetz zum Rückführen eines flüssigen Elektrolyten durch jeden Brennstoffzellenstapel, wobei das Rückführungsnetzwerk (25, 32, 40, 46, 54) einen Fluidzufuhrkanal (40) und ein Entkopplungsmodul (44) im Rückführungsnetzwerk einschließt, das Entkopplungsmodul (44) sich in einem Kanal befindet, der Elektrolyt zu einem Brennstoffzellenstapel (20) führt; das Entkopplungsmodul mit einem Durchlass (48) versehen ist und eine obere Kammer (57) und eine untere Kammer (58) umfasst, die durch eine gelochte Platte (60) getrennt sind, und der Fluidzufuhrkanal (40) ausgelegt ist, um der oberen Kammer (57) den flüssigen Elektrolyt durch eine Einlassöffnung zuzuführen; wobei die gelochte Platte (60) einen Oberflächenbereich von mindestens dem Zweifachen des Querschnittsbereichs der Einlassöffnung aufweist und mehrere Löcher definiert, wobei jedes Loch eine Senkbohrung (64) für den Durchfluss des flüssigen Elektrolyten in die untere Kammer ist; die Auslegung derart ist, dass bei Betrieb sich der Elektrolyt über die Oberseite der gelochten Platte verteilt und eine Tiefe auffüllt, bei der die Einflussrate der Flussrate des Elektrolyten durch die Bohrungen der gelochten Platte gleich ist; die untere Kammer (58) eine Auffangauflage (66) einschließt, um den flüssigen Elektrolyt, der durch die Bohrungen fällt, aufzufangen, die Auffangauflage mit einem Fluidflusskanal (46) des Rückführungsnetzwerks kommuniziert, die Auffangauflage (66) ausreichend weit unterhalb der Platte ist, dass der flüssige Elektrolyt, der durch eine Senkbohrung gefallen ist, in Tröpfchen aufbricht, bevor er die Auffangauflage erreicht; und die Auffangauflage mit mindestens einem Überlaufkanal an einer höheren Position als der Fluidflusskanal (46) versehen ist, um überschüssigen Elektrolyt zu führen.

2. Brennstoffzellensystem nach Anspruch 1, wobei die gelochte Platte einen Oberflächenbereich von mindestens dem 20-Fachen des Querschnittsbereichs der Einlassöffnung aufweist.

3. Brennstoffzellensystem nach Anspruch 1 oder Anspruch 2, wobei der Fluidfluss durch die Einlassöffnung nicht mit irgendeiner der Bohrungen ausgerichtet ist.

4. Brennstoffzellensystem nach einem der vorhergehenden Ansprüche, wobei der Fluidfluss durch die Einlassöffnung ungefähr orthogonal zu der Ausrichtung der Bohrungen ist.

5. Brennstoffzellensystem nach einem der vorhergehenden Ansprüche, wobei die Bohrungen durch die gelochte Platte an der unteren Fläche der Platte versunken sind.

6. Brennstoffzellensystem nach Anspruch 5, wobei die Bohrungen versunken sind, um eine kegelstumpfförmige Aussparung, deren gegenüberliegenden Oberflächen in einem Winkel von nicht mehr als 130° zueinander geneigt sind, zu einer derartigen Tiefe zu bilden, dass der Durchmesser des niedrigsten Teils jeder Bohrung nicht mehr als das 5-Fache des Durchmessers des nicht versunkenen Teils der Bohrung beträgt.

7. Brennstoffzellensystem nach einem der vorhergehenden Ansprüche, wobei die Auffangauflage über die Basis des Entkopplungsmoduls montiert ist.

8. Brennstoffzellensystem nach einem der vorhergehenden Ansprüche, wobei jeder Überlaufkanal mit einer sekundären Entkopplungseinheit kommuniziert, um den überschüssigen flüssigen Elektrolyten in Tröpfchen aufzubrechen.

9. Brennstoffzellensystem nach Anspruch 8, wobei die sekundäre Entkopplungseinheit einen röhrenförmigen Kanal umfasst, in den flüssiger Elektrolyt ausgelegt ist, von dem Überlaufkanal eingespeist zu werden, wobei der röhrenförmige Kanal einen Abschnitt mit kleinen Löchern durch dessen Wände definiert, durch die der flüssige Elektrolyt als ein Flüssigkeitsstrahl durchdringen kann.

10. Brennstoffzellensystem nach Anspruch 9, wobei der Abschnitt des röhrenförmigen Kanals, in welchen die kleinen Löcher vorhanden sind, sich in einer allgemein horizontalen Richtung erstreckt.

11. Brennstoffzellensystem nach Anspruch 9 oder Anspruch 10, wobei die kleinen Löcher durch die Wand des röhrenförmigen Kanals oberhalb der Horizontalen ausgerichtet sind, damit die Flüssigkeitsstrahlen von der oberen Seite des Abschnitts des röhrenförmigen Kanals durchdringen.

12. Brennstoffzellensystem nach einem der Ansprüche 8 bis 11, wobei die sekundäre Entkopplungseinheit geeignet ist, um eine Flussrate von nicht mehr als der Hälfte, die durch die gelochte Platte passiert, zu führen.

13. Brennstoffzellensystem nach einem der Ansprüche 8 bis 12, wobei das sekundäre Entkopplungsmodul ein gemeinsames Gehäuse mit dem Entkopplungsmodul hat.

## Revendications

1. Système de pile à combustible comprenant au moins un empilement de piles à combustible (20), et un réseau de recirculation pour faire circuler un électrolyte liquide à travers chaque empilement de piles à combustible, le réseau de recirculation (25, 32, 40, 46, 54) comportant un conduit d'alimentation en liquide (40) et un module de découplage (44) dans le réseau de recirculation, le module de découplage (44) étant dans un conduit qui transporte de l'électrolyte vers un empilement de piles à combustible (20) ; le module de découplage étant pourvu d'un évent (48) et comprenant une chambre supérieure (57) et une chambre inférieure (58) séparées par une plaque perforée (60), et le conduit d'alimentation en fluide (40) étant agencé pour fournir l'électrolyte liquide à la chambre supérieure (57) à travers un orifice d'entrée ; la plaque perforée (60) ayant une surface représentant au moins deux fois la section transversale de l'orifice d'entrée, et définissant des perforations multiples, chaque perforation étant une fraisure (64) pour un écoulement de l'électrolyte liquide dans la chambre inférieure ; l'agencement étant tel qu'en fonctionnement de l'électrolyte s'étend sur la partie supérieure de la plaque perforée et se déverse jusqu'à une profondeur à laquelle la vitesse d'écoulement à l'entrée est égale au débit d'électrolyte à travers les trous de la plaque perforée ; la chambre inférieure (58) incluant un plateau de récupération (66) pour collecter l'électrolyte liquide qui tombe à travers les trous,
le plateau de collecte communiquant avec un conduit d'écoulement de fluide (46) du réseau de recirculation, le plateau de collecte (66) étant suffisamment bien en dessous de la plaque pour que l'électrolyte liquide qui est tombé à travers une fraisure se sépare en gouttelettes avant d'atteindre le plateau de collecte ; et
le plateau de collecte étant pourvu d'au moins un canal de trop-plein à une position plus élevée que le conduit d'écoulement de fluide (46), pour transporter de l'électrolyte en excès.

2. Système de pile à combustible selon la revendication 1, dans lequel la plaque perforée a une surface d'au moins 20 fois la surface en coupe de l'orifice d'entrée.

3. Système de pile à combustible selon la revendication 1 ou la revendication 2, dans lequel l'écoulement de fluide à travers l'orifice d'entrée n'est pas aligné sur l'un quelconque des trous.

4. Système de pile à combustible selon l'une quelconque des revendications précédentes, dans lequel l'écoulement de fluide à travers l'orifice d'entrée est approximativement orthogonal à l'orientation des trous.

5. Système de pile à combustible selon l'une quelconque des revendications précédentes, dans lequel les trous à travers la plaque perforée sont fraisés au niveau de la face inférieure de la plaque.

6. Système de pile à combustible selon la revendication 5, dans lequel les trous sont fraisés pour former un évidement tronconique dont les surfaces opposées sont inclinées à un angle ne dépassant pas 130° les uns par rapport aux autres, à une profondeur telle que le diamètre de la partie la plus basse de chaque trou ne dépasse pas 5 fois le diamètre de la partie non fraisée du trou.

7. Système de pile à combustible selon l'une quelconque des revendications précédentes, dans lequel le plateau de collecte est monté au-dessus de la base du module de découplage.

8. Système de pile à combustible selon l'une quelconque des revendications précédentes, dans lequel chaque canal de trop-plein communique avec une unité de découplage secondaire pour séparer l'électrolyte liquide en excès en gouttelettes.

9. Système de pile à combustible selon la revendication 8, dans lequel l'unité de découplage secondaire comprend un conduit tubulaire dans lequel de l'électrolyte liquide est agencé pour être fourni à partir du canal de trop-plein, le conduit tubulaire définissant une partie avec de petites ouvertures à travers sa paroi à travers lesquelles l'électrolyte liquide peut émerger sous la forme d'un jet de liquide.

10. Système de pile à combustible selon la revendication 9, dans lequel la partie du conduit tubulaire dans laquelle se trouvent les petites ouvertures s'étend dans une direction généralement horizontale.

11. Système de pile à combustible selon la revendication 9 ou la revendication 10, dans lequel les petites ouvertures à travers la paroi du conduit tubulaire sont orientées au-dessus de l'horizontale, de sorte que les jets de liquide émergent du côté supérieur de la partie du conduit tubulaire.

12. Système de pile à combustible selon l'une quelconque des revendications 8 à 11, dans lequel l'unité de découplage secondaire est adaptée pour transporter un débit ne dépassant pas la moitié de celui qui passe à travers la plaque perforée.

13. Système de pile à combustible selon l'une quelconque des revendications 8 à 12, dans lequel le module de découplage secondaire a un logement commun avec le module de découplage.
